Europäisches Patentamt

European Patent Office

Office européen des brevets

(11) Veröffentlichungsnummer: **0 465 725 A1**

## (12) EUROPÄISCHE PATENTANMELDUNG

(21) Anmeldenummer: **90124830.2**

(22) Anmeldetag: **19.12.90**

(51) Int. Cl.5: **H02G 15/013**

(30) Priorität: **11.07.90 DE 4022031**

(43) Veröffentlichungstag der Anmeldung:
**15.01.92 Patentblatt 92/03**

(84) Benannte Vertragsstaaten:
**AT BE CH DE ES FR GB IT LI NL SE**

(71) Anmelder: **SIEMENS AKTIENGESELLSCHAFT**
**Wittelsbacherplatz 2**
**W-8000 München 2(DE)**

(72) Erfinder: **Bachel, Ernst**
**Erlenweg 8**
**W-8085 Geltendorf(DE)**
Erfinder: **Steinmetz, Peter, Dipl.-Ing.**
**Nelkenweg 1**
**W-5840 Schwerte(DE)**

(54) Kabeleinführungsdichtung.

(57) Bei der Erfindung handelt es sich um eine Kabeleinführungsdichtung (1) aus verformbarem Material, vorzugsweise aus einem geschäumten Elastomer. Die Längsöffnung (2) zur Einführung eines Kabels weist einen Längsschnitt (3, 4, 5, 6, 7), vorzugsweise in spiralförmiger Schnittführung, auf.

FIG 6

Kabeleinführungsdichtung aus verformbaren Material, vorzugsweise aus einem geschäumten Elastomer, in Form eines Stopfens mit mindestens einer auf den Durchmesser eines einzuführenden Kabels abgestimmten Längsöffnung.

Bisher wird der Kabeleinführungsbereich von Kabelmuffen, z.B. durch selbstklebende Wickelbänder, Kabelschellen, konisch zulaufende gummiartige Tüllen, Stopfbuchsen, Hohlschrauben oder mit zwiebelartig geschlitzten Dichtscheiben abgedichtet. Die letztgenannte Art wird beispielsweise in der US-Patentschrift 4.694.118 beschrieben. Dort wird ein Dichtungskörper verwendet, der im wesentlichen aus konzentrischen Dichtungsringen besteht, die je nach Bedarf ausgeschnitten werden können. Dieser Dichtungskörper besitzt auch einen Längsschlitz, so daß er auch an ungeschnittenen Kabeln eingesetzt werden kann. Alle diese Möglichkeiten haben wesentliche Nachteile, da das Kabeldichtungssystem zum einen durch Schneidtechniken während der Montage, durch Abtrennen von Dichtungsmaterial und/oder durch die Verwendung von speziellem Montagewerkzeug an die Kabeldurchmesser angepaßt werden muß. Ein Irrtum bei der Montage hat meistens zur Folge, daß das Kabelabdichtsystem unbrauchbar ist, d.h. nicht nachgebessert werden kann, wie es z.B. besonders deutlich wird bei einer konisch zulaufenden Tülle. Zum zweiten sind die Kabelabdichtsysteme oft so gestaltet, daß beim Öffnen der Kabel - bzw. Lichtwellenleiter - Garnitur (Muffe) das Dichtsystem demontiert oder gar zerstört werden muß. Dieses wiederum hat zur Folge, daß höhere Montagekosten und Montagezeiten, sowie höhere Umweltbelastungen anfallen. Außerdem muß das Prüf- bzw. Wartungspersonal entsprechend geschult sein.

Es sind jedoch auch Kabelabdichtsysteme aus einem geschäumten Elastomer bekannt, wobei diese nur bei geschnittenen Kabeln, z.B. am Kabelende, eingesetzt werden können. Hiermit ist aber die Anwendung bei ungeschnittenen Kabeln, z.B. bei einem durchgehenden Kabel oder im Reparaturfall bei einem bestehenden Spleiß ausgeschlossen.

Es stellt sich somit die Aufgabe, eine Kabeleinführungsdichtung für Kabelgarnituren zu schaffen, die besonders einfach zu montieren ist und die auch bei ungeschnittenen Kabeln eingesetzt werden kann. Die gestellte Aufgabe wird mit einer Kabeleinführungsdichtung gemäß der Erfindung dadurch gelöst, daß jede Längsöffnung im Stopfen jeweils einen vom äußeren Rand ausgehenden Längsschlitz aufweist.

Durch die Erfindung soll bewirkt werden, daß die Kabel in dem Einführungsbereichen der Kabelgarnituren, die für drucklose Luft- und Erdkabelstrecken verwendet werden, mit Hilfe einer universellen Kabeleinführungsdichtung mit möglichst geringer Montagearbeit eingeführt werden können, wobei größere Durchmesserbereiche erfasst werden sollen. Dabei ist die Dichtung in ihren Dimensionen so ausgeformt, daß sie dem geforderten Prüfdruck standhält.

Die Kabeleinführungsdichtung ist mit einem Längsschnitt versehen, so daß sie nicht nur bei geschnittenen sondern auch bei ungeschnittenen Kabeln verwendet werden kann. Hierdurch ist es möglich, daß die Kabeleinführungsdichtung nicht nur bei der Erstmontage einer Kabel- bzw. Lichtwellenleiter- Strecke mit der Kabelabdichtung, sondern auch bei jedem beliebigen Reparaturfall oder bei nachträglich zu installierenden Kabel- bzw. Lichtwellenleiter- abzweigen eingesetzt werden kann. Darüberhinaus bietet die Erfindung die Möglichkeit, bei einer einmal montierten Kabelabdichtung die Kabelgarnitur zu öffnen, ohne daß die Kabelabdichtung dafür entfernt oder gar zerstört werden muß. Dieses wiederum hat den Vorteil, daß die Kabelgarnitur für Prüfzwecke oder nach einer eventuellen Reparatur des Spleißes ohne neuerliches Montagematerial im Bereich der Kabelabdichtung wieder verschlossen werden kann. Hieraus ergeben sich im wesentlichen geringere Montagekosten und Montagezeiten und eine geringere Umweltbelastung durch wiederverwendbare Materialien. Außerdem ist der Einsatz durch das Prüf- und Wartungspersonal infolge der einfachen Gestaltung der Kabeleinführungsabdichtung unproblematisch.

Die Abdichtung von Kabeln zu einem Gehäuse erfolgt gemäß der Erfindung mit einem Stopfen, der mindestens eine Durchgangsöffnung oder ein Sackloch aufweist, wobei der Stopfen vorzugsweise aus einem geschäumten Elastomer besteht. Durch einen Längsschnitt ist es - wie bereits erwähnt - auch möglich, den erfindungsgemäßen Stopfen bei ungeschnittenen bzw. durchgehenden Kabeln zu verwenden. Der für den Stopfen verwendete Elastomer, der vorzugsweise aus einem geschäumten Silikonkautschuk besteht, erfüllt seine Abdichtaufgabe in vielfältigen Ausgestaltungsformen. Die Druckdichtigkeit kann z.B. durch die Verwendung einer handelsüblichen Silikonpaste verbessert werden, da bei der Benetzung der Dichtflächen eine aus physikalischer Sicht gesehene, bessere Ankopplung des Kabels an den Stopfen und des Stopfens an das umgebende Muffengehäuse stattfindet.

Die Außenkontur der Kabeleinführungsdichtung läßt sich aufgrund der Materialeigenschaften eines geschäumten Elastomers beliebig gestalten, wobei sogar auch komplizierteste Hinterschnitte möglich sind. Um eine bessere Druckdichtigkeit zu erzielen, ist eine glatte Außenhaut der Kabeleinführungsdichtung bevorzugt; dies ist aber nicht zwingend notwendig. Die als Stopfen ausgebildete Kabeleinführungsdichtung kann je nach Anwendungsfall rund, viereckig, mehreckig oder oval ausgeformt sein.

Die Kontur der Längsöffnung, die auch als Sackloch mit austrennbarer Abschlußwand ausgebildet sein kann, läßt sich in der projezierten Grundfläche in beliebigen Formen gestalten. Vorzugsweise ist die Fläche jedoch kreisrund, da die eingesetzten Kabel überwiegend rund ausgebildet sind. Das Zentrum dieser Längsöffnung kann je nach Anwendungsfall zentrisch oder exzentrisch im Stopfen angeordnet sein. Darüberhinaus ist es auch möglich, daß die Kabeleinführungsdichtung mehrere Längsöffnungen hat, wobei diese beliebig angeordnet sein können und unter Umständen auch unterschiedliche Durchmesser aufweisen können.

In Längsrichtung der Kabeleinführungsdichtung gesehen, kann die Geometrie der Längsöffnung zylindrisch, konvex oder konkav ausgebildet sein. Auch mäander- oder treppenähnliche Stufungen oder Nuten sind möglich.

Der über die Längsrichtung der Kabeleinführungsdichtung sich erstreckende Längsschnitt kann durchgängig ausgeführt sein oder kurz vor einem Ende als filmdünner Steg enden. Hierbei kann ein gerader oder wellenförmiger Schnitt eingebracht werden, wobei bei letzterem die Dichtungsfläche vergrößert wird. Vorzugsweise ist der Längsschnitt als Spiralschnitt ausgeführt, wobei sich der Umlauf der Spirale nach folgender mathematischen Formel ausgestalten läßt.

$$U = \frac{\ln(r1/r2)}{2p \cdot m}$$

r1 = Spiralenendradius
r2 = Lochradius
m = Steigung der Spirale

Die Erfindung wird nun anhand von 10 Figuren näher erläutert.

Fig. 1 zeigt die Kabeleinführungsdichtung mit einem Radialschnitt.

Fig. 2 zeigt eine Kabeleinführungsdichtung mit einem Schrägschnitt.

Fig. 3 zeigt eine Kabeleinführungsdichtung mit einem Tangentialschnitt.

Fig. 4 zeigt eine in Längsrichtung verlaufene wellenförmige Schnittführung.

Fig. 5 zeigt eine abgestufte Außenkontur der Kabeleinführungsdichtung.

Fig. 6 zeigt eine Kabeleinführungsdichtung mit einer Längsöffnung mit einem Spiralschnitt zur Längsöffnung.

Fig. 7 zeigt eine Kabeleinführungsdichtung mit zwei Längsöffnungen und entsprechenden Spiralschnitten.

Fig. 8 zeigt eine Kabeleinführungsdichtung mit drei Längsöffnungen und entsprechenden Spiralschnitten.

Fig. 9 zeigt eine Kabeleinführungsdichtung mit vier Längsöffnungen und entsprechenden Spiralschnitten.

Fig. 10 zeigt einen Längsschnitt durch die Kabeleinführungsdichtung mit konvexer Ausbildung der Längsöffnung.

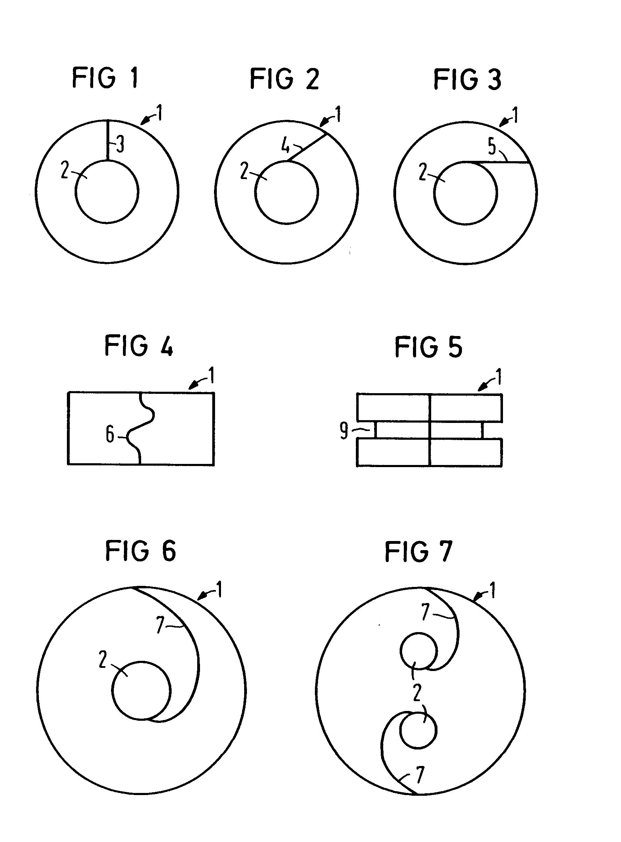

Fig. 1 zeigt eine Kabeleinführungsdichtung 1 gemäß der Erfindung mit einer Längsöffnung 2 zur Einführung eines Kabels. Die als Stopfen ausgebildete Kabeleinführungsdichtung 1 ist mit einem Längsschnitt 3 versehen, der von der Längsöffnung 2 radial nach auswärts geführt ist. Da das Material aus einem Elastomer besteht, kann somit - wie auch bei allen folgenden Ausführungsbeispielen - durch Auseinanderspreizen der Längsdichtung auch ein ungeschnittenes Kabel eingeführt werden.

Fig. 2 zeigt eine Kabeleinführungsdichtung 1 gemäß der Erfindung, deren Längsschnitt 4 strahlenförmig so ausgeführt ist, daß die Einschnittfläche unter einem von 90˚ abweichenden Winkel zu den äußeren bzw. inneren Ringflächen liegt.

Fig. 3 zeigt eine Kabeleinführungsdichtung 1 gemäß der Erfindung, bei der der Längsschnitt 5 tangential nach auswärts von der inneren Ringfläche ausgehend verläuft.

Fig. 4 zeigt die Ausführung des Längsschnittes 6 in profilierter Form. Hier ist eine wellenförmige Ausbildung gewählt; doch sind auch beliebig andere Schnittführungen möglich. Sinn dieser Profilierung ist u.a., daß eine Längsverschiebung im Schnittbereich verhindert wird. Eine derartige Profilierung kann jedoch auch in der dazu senkrecht liegenden Richtung ausgeführt werden. Dies hat unter anderem auch den Vorteil, daß dadurch die Dichtungsfläche vergrößert wird und daß keine Verschiebung im Schnittbereich eintritt.

In Fig. 5 wird eine Kabeleinführungsdichtung 1 gezeigt, bei der die äußere, zur Kabelgarnitur gerichtete Dichtungsfläche profiliert ist. Auf diese Weise kann die Kabeleinführungsdichtung 1 in der entsprechend ausgestalteten Kabelgarnitur fixiert werden. Diese Profilierung kann beliebige Formen aufweisen.

In Fig. 6 ist eine Kabeleinführungsdichtung 1 mit einer zentrisch angeordneten Längsöffnung 2 gezeigt, bei der von der Längsöffnung 2 ausgehend ein Spiralschnitt 7 nach auswärts geführt ist. Bei dieser Anordnung ist die Dichtwirkung besonders gut, da eine "Aufkeilung" bzw. ein Aufspreizen im Längsschnitt nach der Einführung des Kabels verhindert wird. Die Schnittführung folgt der bereits angegebenen mathematischen Formel.

Die Fig. 7 zeigt eine Kabeleinführungsdichtung gemäß der Erfindung mit einer Anordnung von zwei Längsöffnungen 2, die symetrisch zueinander im Stopfen angeordnet sind. Als Beispiel für Längsschnitte sind hier wiederum Spiralschnitte 7 verwendet.

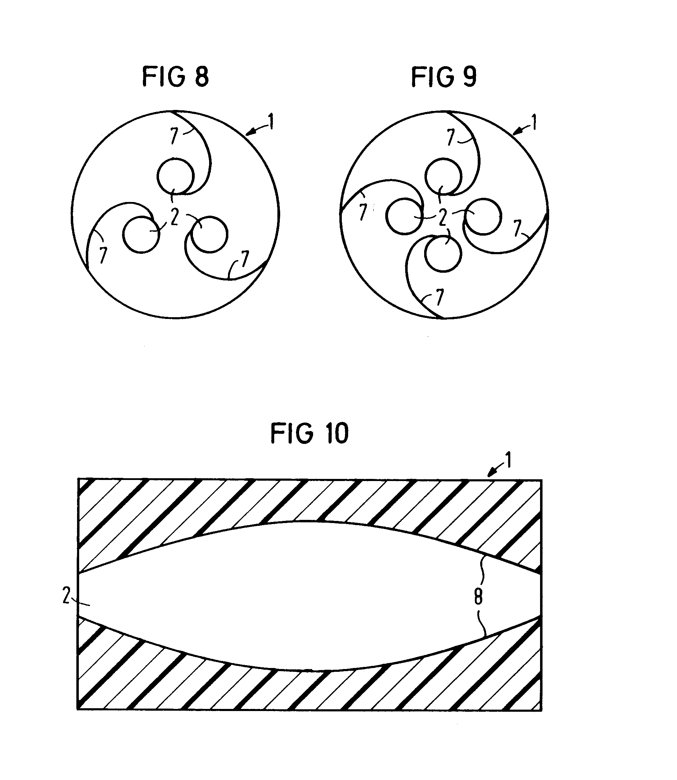

In Fig. 8 ist eine Kabeleinführungsdichtung 1 mit drei symetrisch zueinanderliegenden Längsöffnungen 2 gezeigt, wobei auch hier Spiralschnitte 7 angedeutet sind.

Die Fig. 9 verdeutlicht schließlich ein Ausführungsbeispiel mit vier Längsöffnungen 2, die ebenfalls mit Spiralschnitten 7 versehen sind.

Die Anordnungen der Längsöffnungen, wie auch der Längsschnitte können jedoch in beliebiger Form ausgeführt sein, wobei auch die bereits beschriebenen Ausgestaltungen je nach Bedarf einbezogen werden können.

Die Fig. 10 verdeutlicht noch, daß auch die Längsöffnung 2 für besondere Einsatzfälle zusätzlich profiliert und ausgestaltet werden kann. So wird hier angedeutet, daß die Wandung 8 in Längsrichtung konvex gekrümmt sein kann, d.h. tonnenförmig ausgeformt ist. Diese Ausgestaltung dient zur entsprechenden Ausgleichung verschieden auftretender Druckverhältnisse und außerdem kann mit dieser Maßnahme der Einsatzbereich bezüglich der Kabeldurchmesser erweitert werden.

## Patentansprüche

1. Kabeleinführungsdichtung aus verformbarem Material, vorzugsweise aus einem geschäumten Elastomer, in Form eines Stopfens mit mindestens einer auf dem Durchmesser eines einzuführenden Kabels abgestimmten Längsöffnung,
   **dadurch gekennzeichnet,**
   daß jede Längsöffnung (2) im Stopfen (1) jeweils einen vom äußeren Rand ausgehenden Längsschnitt (3, 4, 5, 6, 7) aufweist.

2. Kabeleinführungsdichtung nach Anspruch 1,
   **dadurch gekennzeichnet,**
   daß als verformbares Material Silikonkautschuk verwendet ist.

3. Kabeleinführungsdichtung nach einem der vorhergehenden Ansprüche,
   **dadurch gekennzeichnet,**
   daß die Außenfläche des Stopfens (1) glatt ist.

4. Kabeleinführungsdichtung nach einem der vorhergehenden Ansprüche,
   **dadurch gekennzeichnet,**
   daß die Dichtungsfläche in der Längsöffnung (2) glatt ist.

5. Kabeleinführungsdichtung nach einem der vorhergehenden Ansprüche,
   **dadurch gekennzeichnet,**
   daß der Längsschnitt (3) radial im Winkel von 90° zur Außenfläche ausgeführt ist.

6. Kabeleinführungsdichtung nach einem der Ansprüche 1 bis 4,
   **dadurch gekennzeichnet,**
   daß der Längsschnitt (4) strahlenförmig so ausgeführt ist, daß die Einschnittfläche unter einem von 90° abweichenden Winkel verläuft.

7. Kabeleinführungsdichtung nach Anspruch 6,
   **dadurch gekennzeichnet,**
   daß der Längsschnitt (5) von der Längsöffnung (2) tangential nach auswärts geführt ist.

8. Kabeleinführungsdichtung nach einem der Ansprüche 1 bis 4,
   **dadurch gekennzeichnet,**
   daß der Längsschnitt (7) in seiner Grundform nahezu spiralförmig geführt ist.

9. Kabeleinführungsdichtung nach Anspruch 8,
   **dadurch gekennzeichnet,**
   daß der Spiralschnitt den Verlauf u nach der folgenden Formel aufweist.

$$U = \frac{\ln\,(r1/r2)}{2p \cdot m}$$

Wobei
r1 = Spiralen-Endradius
r2 = Radius der Längsöffnung
m = Steigung der Spirale

10. Kabeleinführungsdichtung nach einem der vorhergehenden Ansprüche,
    **dadurch gekennzeichnet,**
    daß die Schnittfläche des Längsschnittes (6) profiliert ist.

11. Kabeleinführungsdichtung nach Anspruch 10,
    **dadurch gekennzeichnet,**
    daß die Schnittfläche (6) wellenförmig ausgebildet ist.

12. Kabeleinführungsdichtung nach einem der vorhergehenden Ansprüche,
    **dadurch gekennzeichnet,**
    daß die Ringfläche der Längsöffnung quer zur Längsachse profiliert ist.

13. Kabeleinführungsdichtung nach Anspruch 12,
    **dadurch gekennzeichnet,**
    daß die Ringfläche der Längsöffnung (2) in Längsrichtung konkav ausgebildet ist.

14. Kabeleinführungsdichtung nach Anspruch 12,
    **dadurch gekennzeichnet,**
    daß die Ringfläche der Längsöffnung (2) in Längsrichtung konvex ausgebildet ist.

15. Kabeleinführungsdichtung nach einem der vorhergehenden Ansprüche,
    **dadurch gekennzeichnet,**
    daß die äußere Ringfläche des Stopfens (1) quer zur Längsrichtung profiliert ist.

16. Kabeleinführungsdichtung nach einem der Ansprüche 12 bis 15,
    **dadurch gekennzeichnet,**
    daß die Profilierung wellenförmig ausgebildet ist.

17. Kabeleinführungsdichtung nach einem der Ansprüche 12 bis 15,
    **dadurch gekennzeichnet,**
    daß die Profilierung (9) stufenförmig ausgeführt ist.

18. Kabeleinführungsdichtung nach einem der vorhergehenden Ansprüche,
    **dadurch gekennzeichnet,**
    daß zwei Längsöffnungen (2) im Stopfen (1) angeordnet sind.

19. Kabeleinführungsdichtung nach einem der Ansprüche 1 bis 17,
    **dadurch gekennzeichnet,**
    daß drei Längsöffnungen (2) im Stopfen (1) angeordnet sind.

20. Kabeleinführungsdichtung nach einem der Ansprüche 1 bis 17,
    **dadurch gekennzeichnet,**
    daß vier Längsöffnungen (2) im Stopfen (1) angeordnet sind.

21. Kabeleinführungsdichtung nach einem der vorhergehenden Ansprüche,
    **dadurch gekennzeichnet,**
    daß die Dichtungsflächen mit Silikonpaste benetzt sind.

FIG 1

FIG 2

FIG 3

FIG 4

FIG 5

FIG 6

FIG 7

## FIG 8

## FIG 9

## FIG 10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,A | DE-U-7 501 835 (K. PFISTERER)<br>* Seite 8, Absatz 2,3 * * Seite 9, Absatz 3; Anspruch 5; Figuren 6, 7 *<br>– – – | 1,3,4,6,8, 18,2 | H 02 G 15/013 |
| X | DE-A-2 843 089 (SIEMENS)<br>* Seite 4, Zeile 8 - Seite 5, Zeile 24; Figur 1 *<br>– – – | 1-5,7,18 | |
| X | WO-A-8 606 561 (RAYCHEM)<br>* Seite 19, Zeilen 2 - 7; Figuren 4, 5 *<br>– – – | 1,3,4,6 | |
| A | US-A-2 771 502 (J.H. KING ET AL.)<br>* Spalte 4, Zeilen 45 - 59; Figuren 10-12 *<br>– – – | 1-5 | |
| A | US-A-3 936 590 (P.A. ALBANO)<br>* Spalte 3, Zeilen 24 - 38; Figur 4 *<br>– – – | 1-5,19 | |
| X,P | EP-A-0 384 176 (MINNESOTA MINING AND MANUFAC-TURING COMPANY)<br>* Spalte 6, Zeilen 4 - 38; Figuren 1-5, 9, 10 *<br>– – – – – | 1,3,4 | |

| RECHERCHIERTE SACHGEBIETE (Int. Cl.5) |
|---|
| H 02 G |

Der vorliegende Recherchenbericht wurde für alle Patentansprüche erstellt

| Recherchenort | Abschlußdatum der Recherche | Prüfer |
|---|---|---|
| Den Haag | 21 August 91 | LOMMEL A. |